# EUROPEAN PATENT SPECIFICATION

(11) **EP 1 830 101 B1**
(45) Date of publication and mention of the grant of the patent: **05.08.2015**
(21) Application number: 05786005.8
(22) Date of filing: 26.09.2005
(51) Int. Cl.: F16G 1/08, F16G 5/06, F16G 5/20

(54) **DRIVING BELT**
TREIBRIEMEN
COURROIE DE TRANSMISSION

(30) Priority: 10.11.2004 JP 2004326853
(43) Date of publication of application: 05.09.2007
(73) Proprietor: Bando Chemical Industries Ltd., Kobe-shi, Hyogo 652-0882 (JP)
(72) Inventor: YOSHIDA, Yasuhiko, c/o BANDO CHEMICAL IND., LTD., Kobe-shi, Hyogo 652-0882 (JP); TACHIBANA, Hiroyuki, c/o BANDO CHEMICAL IND., LTD., Kobe-shi, Hyogo 652-0882 (JP); SHIRIIKE, Hiroyuki, c/o BANDO CHEMICAL IND., LTD., Kobe-shi, Hyogo 652-0882 (JP)
(74) Representative: Weickmann & Weickmann
(86) International application number: PCT/JP2005/017635
(87) International publication number: WO 2006/051652

(56) References cited:
- EP-A1- 1 043 517
- EP-A1- 1 098 110
- WO-A1-00/04098
- JP-A- 2003 130 137
- JP-A- 2004 190 686
- JP-A- 2004 292 735

## Description

### TECHNICAL FIELD

The present invention relates to a power transmission belt.

### BACKGROUND ART

Generally, power transmission belts have a compressed rubber layer and an adhesive rubber layer, and fiber core wires are bonded and embedded in the adhesive rubber layer, and a rubber-lined canvas is bonded to all peripheral faces of the belt including a top face, bottom face or side faces as required. Hitherto, in such a power transmission belt, chloroprene rubber or a mixture of hydrogenated nitrile rubber and chlorosulfonated polyethylene rubber is usually used for the compressed rubber layer, but in recent years, there are requests to dechlorinate the rubber for rubbers which are materials of a power transmission belt from the viewpoint of environmental protection. Responding to this request, it is attempted to use ethylene-α-olefin-diene rubber such as ethylene-propylene-diene rubber (EPDM) for the adhesive rubber layer in addition to the compressed rubber layer. WO 00/04098 discloses such a power transmission belt according to the preamble of claim 1.

In Patent Document 1, a power transmission belt, in which heat resistance and durability are improved by using a vulcanized substance of a rubber composition capable of crosslinking by sulfur, using ethylene-α-olefin elastomer, as an adhesive rubber layer and using a vulcanized substance of a rubber composition capable of crosslinking by an organic peroxide, using ethylene-α-olefin elastomer, as a compressed rubber layer, is disclosed.

In Patent Document 2, a rubber composition and a power transmission belt using this rubber composition, in which by adding N,N'-m-phenylenedimaleimide to ethylene-α-olefin elastomer in a specific amount as a co-crosslinking agent, heat resistance and adhesive wear resistance are improved and durability is improved, are disclosed.

But, these power transmission belts have problems that it is inadequate in terms of dynamic adhesion and heat-resistant adhesion, heat resistance, abrasion resistance and an abnormal noise-preventing property. And, when a species of a crosslinking system by which the adhesive rubber layer is crosslinked is different from that of a crosslinking system by which the compressed rubber layer is crosslinked, there is also a problem that the adhesion of an interface between the adhesive rubber layer and the compressed rubber layer is small and unstable and therefore the power transmission belt's durability is low.

In Patent Document 3, a power transmission belt, having a compressed rubber layer and an adhesive rubber layer both comprising ethylene-α-olefin-diene rubber is disclosed, in which an excellent dynamic adhesive force is imparted to an interface between core wires and the adhesive rubber layer by applying an adhesive treatment to the core wires with a resorcin-formalin-latex adhesive composition containing rubber latex of chlorosulfonated polyethylene or alkylated chlorosulfonated polyethylene as a latex component.

However, ethylene-propylene-diene rubber (EPDM) is low in polarity and reactivity since its main chain does not have a double bond, and therefore this rubber is resistant to adhesion in normal formulation. Therefore, there is a problem that an adhesive force is apt to deteriorate at the interface between the resorcin-formalin-latex adhesive and the rubber layer. Further, heat resistance, abrasion resistance, and an abnormal noise-preventing property may be insufficient.

Patent Document 1: Japanese Kokai Publication No. Hei11-193849
Patent Document 2: Japanese Kokai Publication No. Hei11-349752
Patent Document 3: Japanese Kokai Publication No. 2001-003991

### SUMMARY OF THE INVENTION

In view of the above state of the art, it is an object of the present invention to provide a power transmission belt which is superior in dynamic adhesion and heat-resistant adhesion against repeated flexing of a power transmission belt or running under heating conditions around an engine, and is also superior in heat resistance, abrasion resistance and an abnormal noise-preventing property.

The present invention pertains to a power transmission belt in which an adhesive rubber layer in which core wires are embedded along the longitudinal direction of the belt is bonded by vulcanization to a compressed rubber layer laminated on the inner surface of the above-mentioned adhesive rubber layer, wherein the above-mentioned adhesive rubber layer and the above-mentioned compressed rubber layer are formed by using ethylene-α-olefin-diene rubber compound, and the diene content in ethylene-α-olefin-diene rubber of the above-mentioned adhesive rubber layer is equal to or larger than the diene content in ethylene-α-olefin-diene rubber of the above-mentioned compressed rubber layer, and the diene content in ethylene-α-olefin-diene rubber of the above-mentioned adhesive rubber layer is 6 to 10% by mass and the diene content in ethylene-α-olefin-diene rubber of the above-mentioned compressed rubber layer is 0 to 4.5 by mass.

Both the above-mentioned adhesive rubber layer and the above-mentioned compressed rubber layer are preferably crosslinked by peroxide or sulfur.

Preferably, the above adhesive rubber layer contains a co-crosslinking agent and is crosslinked by peroxide.

Hereinafter, the present invention will be described in detail.

### DETAILED DESCRIPTION OF THE INVENTION

The power transmission belt of the present invention is characterized in that the diene content in ethylene-α-olefin-diene rubber of the adhesive rubber layer is equal to or larger than the diene content in ethylene-α-olefin-diene rubber of the compressed rubber layer, and the adhesive rubber layer and the compressed rubber layer, respectively, contain specific amounts of the above-mentioned dienes. Therefore, the power transmission belt of the present invention has the excellent adhesion of the adhesive rubber layer to the core wires and the excellent adhesion of the adhesive rubber layer to the compressed rubber layer. The power transmission belt of the present invention is excellent in heat resistance, abrasion resistance and abnormal noise-preventing property since the diene content of the compressed rubber layer is relatively low.

The present invention pertains to the power transmission belt in which the adhesive rubber layer, in which core wires are embedded along the longitudinal direction of the belt, is bonded by vulcanization to the compressed rubber layer laminated on the inner surface of the above-mentioned adhesive rubber layer, wherein the above-mentioned adhesive rubber layer and the above-mentioned compressed rubber layer are formed by using ethylene-α-olefin-diene rubber compound (a compound consisting of ethylene-α-olefin-diene rubber, and another components as required).

As the above-mentioned ethylene-α-olefin-diene rubber, rubbers consisting of a copolymer of α-olefin except ethylene, ethylene, and diene (nonconjugated diene), substitution products thereof partially substituted by halogen, or mixture of two or more species of these compounds are used. As the above-mentioned α-olefin except ethylene, at least one selected from propylene, butene, hexene and octene is preferably used. Among others, preferable ethylene-α-olefin-diene rubber is ethylene-propylene-diene rubber (hereinafter, also referred to as an EPDM), but halogen-substituted products thereof, or a substance mixed with other rubbers may be used.

Examples of commercially available products of the above ethylene-propylene-diene rubber (EPDM) include X-3012P, 3085 (trade name, produced by Mitsui Chemicals, Inc.), EP-21, EP-65 (trade name, produced by JSR Corporation), and 5754, 582F (trade name, produced by Sumitomo Chemical Co., Ltd.)

The diene content in ethylene-α-olefin-diene rubber of the above adhesive rubber layer is equal to or larger than the diene content in ethylene-α-olefin-diene rubber of the above compressed rubber layer.

In the present invention, it was found that by increasing the diene content in ethylene-α-olefin-diene rubber, the reactivity during crosslinking could be enhanced and, adhesive forces between core wires and the adhesive rubber layer and between the adhesive rubber layer and the compressed rubber layer could be enhanced. Further, it was found 000that by increasing the diene content, disadvantages that heat resistance is deteriorated, resulting in the degradation of the compressed rubber layer due to heat build-up thereof during prolonged running of the power transmission belt, and that abnormal noise tends to be produced when coming in contact with a pulley arise. Accordingly, in the power transmission belt of the present invention, ethylene-α-olefin-diene rubber is used as a component of the adhesive rubber layer and the compressed rubber layer, and the ethylene-α-olefin-diene rubber having a relatively low diene content is used for the compressed rubber layer. And, as a result of this, in the present invention, it is possible to impart an excellent adhesive force to interfaces between core wires and the adhesive rubber layer and between the adhesive rubber layer and the compressed rubber layer, and further it is also possible to impart excellent heat resistance, excellent abnormal noise resistance, and a property of low surface energy. The diene content in ethylene-α-olefin-diene rubber of the above adhesive rubber layer is preferably larger than the diene content in ethylene-α-olefin-diene rubber of the above compressed rubber layer.

In ethylene-α-olefin-diene rubber contained in the above-mentioned adhesive rubber layer, the above diene content is 3.5 to 10% by mass with respect to 100% by mass of the total amount of ethylene, α-olefin and diene which constitute the above ethylene-α-olefin-diene rubber. When the diene content is smaller than 3.5% by mass, there is a possibility that adequate adhesion cannot be attained. When it is larger than 10% by mass, heat resistance is deteriorated and the break of the belt becomes apt to occur at the time of running the belt. The above diene content is preferably 3.5 to 9.5% by mass

In ethylene-α-olefin-diene rubber contained in the above-mentioned compressed rubber layer, the above diene content is 0 to 6% by mass with respect to 100% by mass of the total amount of ethylene, α-olefin and diene, which constitute the above ethylene-α-olefin-diene rubber. When the diene content is larger than 6% by mass, there is a possibility that heat resistance is deteriorated and abnormal noise is produced at the time of running the belt, and particularly in the compressed rubber layer, there is a possibility that the degradation of the belt due to heat build-up become serious for prolonged running of the power transmission belt. Incidentally, ethylene-α-olefin-diene rubber of the case where the diene content is 0% by mass represents ethylene-α-olefin rubber not containing diene.

In ethylene-α-olefin-diene rubber contained in the above-mentioned adhesive rubber layer and compressed rubber layer, the content of the above ethylene is preferably 50 to 80% by mass with respect to 100% by mass of the total amount of ethylene, α-olefin and diene, which constitute the above ethylene-α-olefin-diene rubber, and the content of the above α-olefin is preferably 20 to 50% by mass.

As the above ethylene-α-olefin-diene rubber, a substance having Mooney viscosity ML₁₊₄ (100°C) of 20 to 120 is preferably used.

As a component of the above diene, generally, nonconjugated diene such as 1,4-hexadiene, dicyclopentadiene, or ethylidenenorbornene is appropriately employed. These may be used singly or in combination of two or more species. And, as for the compressed rubber layer, it is possible to select ethylene-propylene rubber (EPR) not containing a diene component.

As the core wire in the above adhesive rubber layer, a polyester core wire, a nylon core wire, a vinylon core wire, an aramide core wire and the like are suitably used, and particularly as the above polyester core wire, polyethylene terephthalate, polyethylene naphthalate and the like are suitably used, and as the above nylon core wire, 6,6-nylon (polyhexamethyleneadipamide) and 6 nylon are suitably used. As the above aramide core wire, copolyparaphenylene·3,4'-oxydiphenylene·terephthalamide and polyparaphenylene terephthalamide, polymethaphenylene isophthalamide and the like are suitably used. Preferably, these core wires are subjected to an adhesive treatment by a resorcin-formalin-latex adhesive composition (hereinafter, it may be referred to as an RFL adhesive) and are embedded in the above adhesive rubber layer. By applying the RFL treatment, the adhesion of the core wires to the adhesive rubber layer become well. These core wires may be used singly or in combination of two or more species.

An RFL adhesive used in the above-mentioned RFL treatment can be generally prepared by condensating resorcin with formalin in a molar ratio of resorcin to formalin of 1: 3 to 3:1 in the presence of a basic catalyst to prepare an aqueous solution of a concentration of 5 to 80% by mass of resorcin-formalin resin (initial resorcin-formalin condensate, hereinafter, also referred to as an RF), and mixing the resulting initial resorcin-formalin condensate with rubber latex. The solid content of the above-mentioned RFL adhesive is generally in a range of 10 to 50% by mass. As a rubber component of the latex, chlorosulfonated polyethylene, alkylated chlorosulfonated polyethylene or the like is used.

As for the above-mentioned RFL treatment, it is possible to form an RFL layer of two-layer by impregnated the above core wires with the above RFL adhesive by immersion in the above RFL adhesive, drying the RFL layer, and further passing the RFL layer through an RFL adhesive including carboxyl modified vinylpyridine latex containing a pyridyl group or a carboxyl group, or it is also possible to use an RFL adhesive mixed with two or more kinds of latexes. And, the above-mentioned RFL treatment is not limited to these methods, and a method, in which after the core wires are pre-treated with an epoxy compound or an isocyanate compound, they are treated with the above RFL adhesive, may be employed. Examples of the above pre-treatment include a method of immersing the polyester core wires in a solution containing an isocyanate compound or an epoxy compound and drying it as required.

In the power transmission belt of the present invention, both the above adhesive rubber layer and the above compressed rubber layer are preferably crosslinked by peroxide or sulfur.

Any one of crosslinking by sulfur and crosslinking by peroxide may be used for crosslinking the above adhesive rubber layer and compressed rubber layer, but it is preferred to use the same species of crosslinking systems for the adhesive rubber layer and the compressed rubber layer. By using the same species of crosslinking systems, the adhesion of an interface between the adhesive rubber layer and the compressed rubber layer is improved and the stability of the belt becomes better. It is desired to avoid use of different species of crosslinking systems since this may cause the local load to be exerted on the power transmission belt during running through differences in affinity, crosslinking forms and crosslinking speed and the fracture at an interface between the layers to occur.

The peroxide crosslinking agent is not particularly limited and ordinary organic peroxide is used, and examples of the organic peroxides include dicumyl peroxide, di-t-butylperoxide, t-butylcumyl peroxide, benzoyl peroxide, 1,3-bis(t-butyl peroxy-isopropyl)benzene, 2,5-dimethyl-2,5-di(t-butylperoxy)hexine-3, 2,5-dimethyl-2,5-(benzoylperoxy)hexane, and 2,5-dimethyl-2,5-mono(t-butylperoxy)hexane. The above-mentioned organic peroxides are used singly or as a mixture in combination of these organic peroxides, and they are generally used within a range of 0.005 to 0.02 grams with respect to 100 grams (solid content) of ethylene-α-olefin-diene rubber.

In the case of the above-mentioned crosslinking by peroxide, a processing aid (a co-crosslinking agent) may be compounded. By compounding the processing aid, it is possible to increase a crosslinking degree to further stabilize an adhesion force and to prevent problems such as adhesive wear and the like. Examples of the above-mentioned processing aid include substances usually used for crosslinking by peroxide such as TAIC, TAC, 1,2-polybutadiene, and metal salts of unsaturated carboxylic acid, oximes, guanidine, trimethylolpropane trimethacrylate, ethyleneglycol dimethacrylate, N,N'-m-phenylenebismaleimide and sulfur. Among others, it is preferred to use N,N'-m-phenylenebismaleimide and metal salts of unsaturated carboxylic acid. These processing aids may be used singly or in combination of two or more species.

In the case of vulcanization by sulfur, an amount of sulfur to be added is preferably 0.5 to 3.0 parts by mass with respect to 100 parts by mass of ethylene-α-olefin-diene rubber.

In the case of vulcanization by sulfur, vulcanization accelerators may be compounded. By compounding the vulcanization accelerator to increase a degree of vulcanization, it is possible to prevent a problem such as adhesive wear. The above-mentioned vulcanization accelerator may be used as long as it is generally used as a vulcanization accelerator, and examples of the vulcanization accelerators include trimethylthiourea (TMU), N-oxydiethylene benzothiazole-2-sulfenamide (OBS), tetramethylthiuram disulfide (TMTD), tetraethylthiuram disulfide (TETD), zinc dimethyldithiocarbamate (ZnMDC), zinc diethyldithiocarbamate (ZnEDC), N-cyclohexylbenzothiazole-2-sulfenamide, 2-mercaptobenzothiazole, and dibenzothiazolyl disulfide.

In the power transmission belt of the present invention, short fiber such as nylon-6, nylon-66, polyester, cotton, aramide and the like may be mixed in the above compressed rubber layer. When the belt contains the above-mentioned short fiber, the side pressure resistance of the above compressed rubber layer is improved, and short fiber is exposed on the surface of the compressed rubber layer which is a face to come in contact with a pulley and this reduces a friction coefficient of the compressed rubber layer, and thereby noises produced during running the belt can be reduced. Further, an adhesive treatment is usually applied to the surface of short fiber.

In the present invention, the ethylene-α-olefin-diene rubber compound for forming the compressed rubber layer and the adhesive rubber layer may contain various agents commonly used in rubber industries, for example, reinforcing materials such as carbon black, silica, glass fiber, ceramic fiber and the like, fillers such as calcium carbonate, talc and the like, plasticizers, stabilizers, vulcanization aids, coloring materials and the like as required in addition to the above-mentioned components.

An ethylene-α-olefin-diene rubber compound for forming the above-mentioned compressed rubber layer and adhesive rubber layer can be obtained by mixing ethylene-α-olefin-diene rubber uniformly, together with agents described above as required, with a usual mixing means such as a roll mixer, a Banbury mixer and the like.

The above adhesive rubber layer is bonded to the above compressed rubber layer by vulcanization. A method of the above-mentioned bonding by vulcanization is not particularly limited and publicly known method may be employed.

The power transmission belt of the present invention is formed by combining the adhesive rubber layer in which core wires are embedded along the longitudinal direction of the belt and the compressed rubber layer laminated on the inner surface of the adhesive rubber layer through adhesion, and example of such a power transmission belt include a V-ribbed belt, a raw edge V-belt and a flat belt.

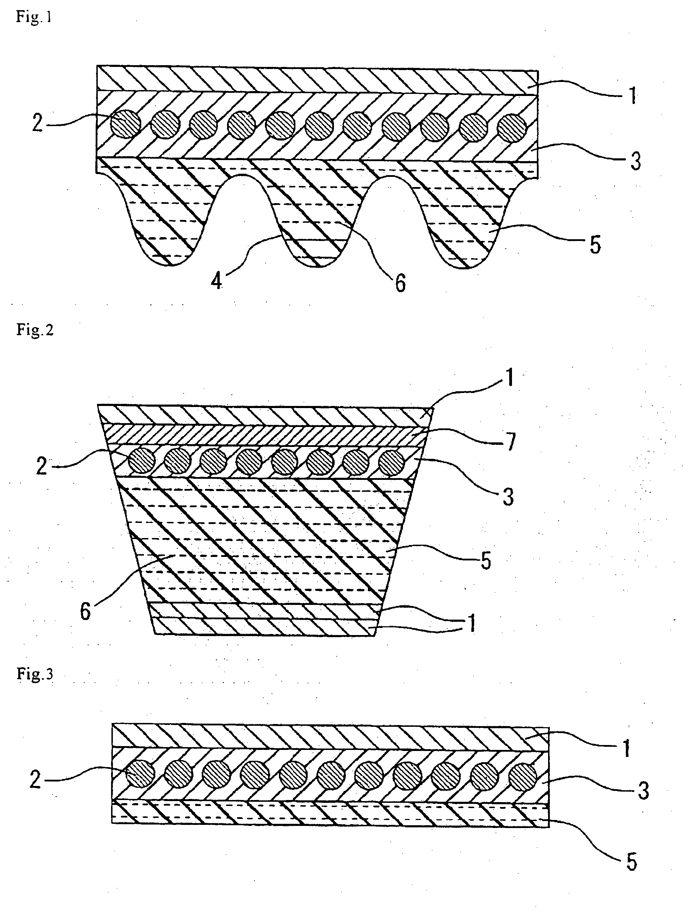

Examples of the power transmission belt of the present invention will be described by use of Figures 1 to 3.

Figure 1 is a transverse sectional view (sectional plane perpendicular to the longitudinal direction of a belt) of an example of a V-ribbed belt, and on the top face of the belt, a rubber-lined canvas layer 1 of a single layer or multilayer is formed, and the adhesive rubber layer 3 is laminated adjacent to the inside the canvas layer. In this adhesive rubber layer, a plurality of core wires 2 of low elongation consisting of fiber code are embedded at some spaces along the longitudinal direction of the belt. Further, the compressed rubber layer 5 is laminated adjacent to the inside this adhesive rubber layer. This compressed rubber layer is formed on ribs 4 that are spaced to each other along the longitudinal direction of the belt. In many cases, in the compressed rubber layer 5, short fibers 6 are dispersed with the fiber being oriented to the direction of width of the belt in order to enhance side pressure resistance.

Figure 2 is a transverse sectional view of an example of a raw edge V-belt, and on the top face of the belt, a rubber-lined canvas layer 1 of a single layer or multilayer is formed as with the above case and an upper rubber layer 7 is laminated as required, and the adhesive rubber layer 3 in which the core wires 2 are embedded is laminated adjacent to the inside the upper rubber layer as with the above case. Further, the compressed rubber layer 5 is laminated adjacent to the inside this adhesive rubber layer. In many cases, in the compressed rubber layer 5, short fibers 6 are dispersed with the fiber being oriented to the direction of width of the belt in order to enhance side pressure resistance. A rubber-lined canvas layer 1 of a single layer or multilayer is generally laminated adjacent to the inside the compressed rubber layer.

Figure 3 is a transverse sectional view of an example of a flat belt, and the rubber-lined canvas layer 1, the adhesive rubber layer 3 and the compressed rubber layer 5 are laminated as with the above case.

The power transmission belt in accordance with the present invention can be manufactured by ordinary methods hitherto known. For example, taking a V-ribbed belt for an example, after a sheet of or a plurality of rubber coated canvases and unvulcanized sheets for a adhesive rubber layer are wound around the side of a cylindrical forming drum with a smooth surface, a polyester core wire is spun in a spiral manner around these sheets, and an unvulcanized sheet for a adhesive rubber layer is wound thereon and then an unvulcanized sheet for a compressed rubber layer is further wound to form a laminate. This laminate is heated and pressurized in a vulcanizer to be vulcanized to obtain an annular substance. Next, this annular substance is looped between a drive pulley and a driven pulley and a plurality of ribs are formed on the surface with a grinding wheel while running the belt under a prescribed tension: Thereafter, this annular substance is further looped between other drive pulley and other driven pulley and cut to the prescribed width while running the belt to obtain a V-ribbed belt as a product.

The present invention pertains to a power transmission belt in which an adhesive rubber layer in which core wires are embedded along the longitudinal direction of the belt is bonded by vulcanization to a compressed rubber layer laminated on the inner surface of the above-mentioned adhesive rubber layer, wherein the above-mentioned adhesive rubber layer and the above-mentioned compressed rubber layer are formed by using ethylene-α-olefin-diene rubber compound, and the diene content in ethylene-α-olefin-diene rubber of the above-mentioned adhesive rubber layer is equal to or larger than the diene content in ethylene-α-olefin-diene rubber of the above-mentioned compressed rubber layer, and the adhesive rubber layer and the compressed rubber layer, respectively, contain specific amounts of the above-mentioned dienes. Therefore, the above-mentioned power transmission belt is superior in the adhesion between the adhesive rubber layer and the core wires and the adhesion between the adhesive rubber layer and the compressed rubber layer (dynamic adhesion and heat-resistant adhesion), and is also superior in heat resistance, abrasion resistance and an abnormal noise-preventing property.

Since the power transmission belt of the present invention is constructed as described above, it is superior in dynamic adhesion and heat-resistant adhesion between the adhesive rubber layer and the core wires or the compressed rubber layer, and is also superior in heat resistance, abrasion resistance and an abnormal noise-preventing property. Accordingly, the above-mentioned power transmission belt can be suitably applied to belts for transmission such as a belt for driving of automobile's auxiliaries (dynamo, air conditioner, power steering and the like).

### BRIEF DESCRIPTION OF THE DRAWINGS

Figure 1 is a transverse sectional view (sectional plane perpendicular to the longitudinal direction of a belt) of an example of a V-ribbed belt,
Figure 2 is a transverse sectional view of an example of a raw edge V-belt,
Figure 3 is a transverse sectional view of an example of a flat belt, and

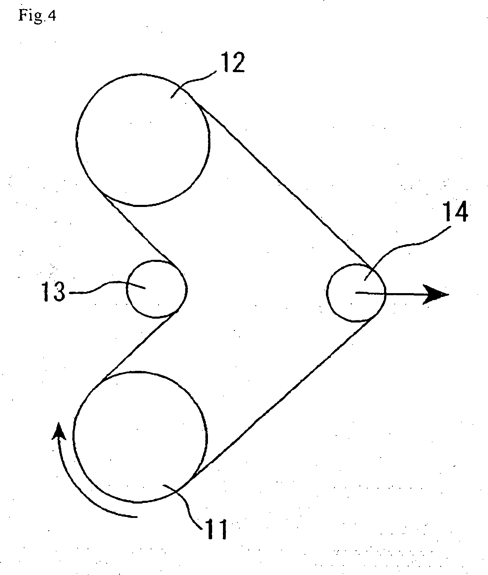

Figure 4 is a view illustrating the situation of running test of a power transmission belt

### DESCRIPTION OF SYMBOLS

- 1: rubber-lined canvas layer
- 2: core wires
- 3: adhesive rubber layer
- 4: rib
- 5: compressed rubber layer
- 6: short fiber
- 7: top rubber layer
- 11: drive pulley
- 12: driven pulley
- 13: idler pulley
- 14: tension pulley

### BEST MODE FOR CARRYING OUT THE INVENTION

Hereinafter, the present invention will be described in more detail by way of examples, but the present invention is not limited to these examples. In addition, "part (s)" and "%" refer to "part(s) by mass" and "% by mass" in Examples, unless otherwise specified.

### (Examples 1 to 12 and Comparative Examples 1 to 4)

### (Production of adhesive rubber layer and compressed rubber layer)

Each of compositions for an adhesive rubber layer was prepared from the rubber compound shown in Table 1, and this composition was kneaded with a Banbury mixer and then rolled with a calendaring roll to prepare an unvulcanized sheet of a rubber compound for an adhesive rubber layer. Each of compositions for a compressed rubber layer was prepared from the rubber compound shown in Table 2 to prepare an unvulcanized sheet of a rubber compound for a compressed rubber layer similarly. Commercially available products used are as follows.
ethylene-propylene-diene rubber (EPDM):
   "X-3012P" (diene content 3.5% by mass, ethylene content 72% by mass, propylene content 24.5% by mass, Mooney viscosity ML₁₊₄ (100°C) 15, produced by Mitsui Chemicals, Inc.)
   "3085" (diene content 4.5% by mass, ethylene content 62% by mass, propylene content 33.5% by mass, Mooney viscosity ML₁₊₄ (100°C) 62, produced by Mitsui Chemicals, Inc.)
   "582F" (diene content 6.0% by mass, ethylene content 71% by mass, propylene content 22% by mass, Mooney viscosity ML₁₊₄ (125°C) 67, produced by Sumitomo Chemical Co., Ltd.)
   "EP-21" (diene content 6.0% by mass, ethylene content 61% by mass, propylene content 33% by mass, Mooney viscosity ML₁₊₄ (100°C) 38, produced by JSR Corporation)
   "EP-65" (diene content 9.0% by mass, ethylene content 54% by mass, propylene content 37% by mass, Mooney viscosity ML₁₊₄ (100°C) 74, produced by JSR Corporation)
   "5754" (diene content 7.0% by mass, ethylene content 63% by mass, propylene content 30% by mass, Mooney viscosity ML₁₊₄ (100°C) 30, produced by Sumitomo Chemical Co., Ltd.)
   "301" (diene content 3. 0% by mass, ethylene content 62% by mass, propylene content 35% by mass, Mooney viscosity ML₁₊₄ (100°C) 55, produced by Sumitomo Chemical Co., Ltd.) ethylene-α-olefins:
   "Engage 8180" (ethylene-octene, diene content 0% by mass, ethylene content 83% by mass, octene content 17% by mass, Mooney viscosity ML₁₊₄ (121°C) 35, produced by DuPont Dow Elastomers L.L.C.)
      1) HAF carbon (produced by Mitsubishi Chemical Corporation)
      2) silica: "Tokusil Gu", produced by Tokuyama Corporation
      3) paraffin oil: "Sunflex 2280", produced by Japan Sun Kagaku K.K.
      4) vulcanization agent: oil sulfur, produced by Hosoi Chemical Industry Co., Ltd.
      5) vulcanization aid (stearic acid), produced by KAO CORPORATION
      6) vulcanization aid (zinc oxide), produced by Sakai Chemical Industry Co.,Ltd.
      7) tackifier: "petroleum resins Quintone A100", produced by ZEON CORPORATION
      8) short fiber: cotton powder
      9) short fiber: nylon-66 fiber, 6 dexl mm

**Table 1**

| | | Crosslinking by Peroxide | | | | | | | Crosslinking by sulfur | |
|---|---|---|---|---|---|---|---|---|---|---|
| | | Compound 1 | Compound 2 | Compound 3 | Compound 4 | Compound 5 | Compound 6 | Compound 9 | Compound 7 | Compound 8 |
| Species of EPDM | X-3012P (produced by Mitsui Chemicals, Inc., diene content 3.5% by weight) | 100 | - | - | - | - | - | - | - | - |
| | 3085 (produced by Mitsui Chemicals, Inc., diene content 4.5% by weight) | - | 100 | - | - | 100 | 100 | - | 100 | - |
| | EP-21 (produced by JSR Corporation, diene content 6.0% by wight) | - | - | 100 | - | - | - | - | - | 100 |
| | EP-65 (produced by JSR Corporation, diene content 9.0% by weight) | - | - | - | 100 | - | - | - | - | - |
| | 301 (produced by Sumitomo Chemical Co., Ltd., diene content 3.0% by weight) | - | - | - | - | - | - | 100 | - | - |
| Rubber, agent etc. | HAF carbon ¹⁾ | 50 | 50 | 50 | 50 | 50 | 50 | 50 | 50 | 50 |
| | Silica²⁾ | 15 | 15 | 15 | 15 | 15 | 15 | 15 | 15 | 15 |
| | Paraffin oil³⁾ | 20 | 20 | 20 | 20 | 20 | 20 | 20 | 20 | 20 |
| | Vulcanization agent (oil sulfur)⁴⁾ | 2 | 2 | 2 | 2 | 2 | 2 | 2 | 2 | 2 |
| | Vulcanization aid (stearic acid)⁵⁾ | 1 | 1 | 1 | 1 | 1 | 1 | 1 | 1 | 1 |
| | Vulcanization aid (zinc oxide)⁶⁾ | 5 | 5 | 5 | 5 | 5 | 5 | 5 | 5 | 5 |
| | Tackifier⁷⁾ | 5 | 5 | 5 | 5 | 5 | 5 | 5 | 5 | 5 |
| | Short fiber (cotton powder)⁸⁾ | 2 | 2 | 2 | 2 | 2 | 2 | 2 | 2 | 2 |
| Crosslinking system | Sulfur (oil sulfur) | | | | - | - | - | - | 1 | 1 |
| | Tetraethylthiuram disulfide (TETD) | - | - | - | - | - | - | - | - | 1 |
| | Dibenzothiazyl disulfide (MBTS) | - | - | - | - | - | - | - | 1 | 1 |
| | Dicumyl peroxide | 3 | 3 | 3 | 3 | 3 | 3 | 3 | - | - |
| | Zinc methacrylate | - | - | - | - | 1 | - | - | - | - |
| | N,N'-m-phenylenedimaleimide | - | - | - | - | - | 1 | - | - | - |
| Total amount (parts by mass) | | 203 | 203 | 203 | 203 | 204 | 204 | 203 | 203 | 203 |

**Table 2**

| | | Crosslinking by Peroxide | | | | | Crosslinking by sulfur |
|---|---|---|---|---|---|---|---|
| | | Compound A | Compound B | Compound C | Compound D | Compound E | Compound F |
| Species of ethylene-a-olefin | X-3012P (EPDM, diene content 3.5% by weight) | - | - | - | 100 | - | - |
| | 3085 (EPDM, diene content 4.5% by weight) | 100 | - | - | - | - | 100 |
| | 582F (EPDM, diene content 6.0% by weight) | - | 100 | - | - | - | - |
| | 5754 (EPDM, diene content 7.0% by weight) | - | - | 100 | - | - | - |
| | Engage 8180 (ethylene-octene, diene content 0% by weight) | - | - | - | - | 100 | - |
| Rubber, agent etc. | HAF carbon¹⁾ | 50 | 50 | 50 | 50 : | 50 | 50 |
| | Paraffin oil³⁾ | 20 | 20 | 20 | 20 | 20 | 20 |
| | Vulcanization agent (oil sulfur)⁴⁾ | 1.2 | 1.2 | 1.2 | 1.2 | 1.2 | 1.2 |
| | Vulcanization aid (stearic acid)⁵⁾ | 1 | 1 | 1 | 1 | 1 | 1 |
| | Vulcanization aid (zinc oxide)⁶⁾ | 5 | 5 | 5 | 5 | 5 | 5 |
| | Nylon fiber (length 3 mm)⁹⁾ | 22 | 22 | 22 | 22 | 22 | 22 |
| Crosslinking system | Sulfur (oil sulfur) | - | - | - | - | - | 1 |
| | Tetraethylthiuram disulfide (TETD) | - | - | - | - | - | 1 |
| | Dibenzothiazyl disulfide (MBTS) | - | - | - | - | - | 1 |
| | Dicumyl peroxide | 3 | 3 | 3 | 3 | 3 | - |
| Total amount (parts by mass) | | 202.2 | 202.2 | 202.2 | 202.2 | 202.2 | 202.2 |

### (Production of RFL adhesive composition)

7.31 parts by mass of resorcin and 10.77 parts by mass of formalin (concentration 37% by mass) were mixed and the resulting mixture was stirred, and to this, an aqueous solution of sodium hydroxide (solid content 0.33 parts by mass) was added, and the mixture was stirred. Thereafter, 160.91 parts by mass of water was added and the mixture was aged for 5 hours to prepare an aqueous solution of resorcin-formalin resin (initial resorcin-formalin condensate) (referred to as an RF) of R/F ratio (a molar ratio of resorcin to formalin) = 0.5. To this RF aqueous solution, chlorosulfonated polyethylene rubber (CSM) latex (solid content 40%) was added in such a way that an RF/L ratio (a molar ratio of RF to latex) was 0.25 (total solid content of latex is 45.2 parts by mass). The resulting mixture was adjusted by adding water in such a way that solid content was 20%. Thereafter, the mixture was stirred and aged for 12 hours to prepare an RFL adhesive composition.

### (Core wires and adhesive treatment)

A pretreatment was applied to polyester core wires (polyester code, 1000 denier, /2x3, second twist 9.5 T/10 cm (Z), first twist 2.19 T/10 cm, produced by Teijin Ltd.) by immersing the wires in a toluene solution of isocyanate (isocyanate solid content 20% by mass), and then heating them at a temperature of 240°C for 40 seconds to be dried.

Next, an adhesive treatment was applied to the polyester core wires thus subjected to the pretreatment by immersing the wires in the above-mentioned RFL adhesive composition, heating them at a temperature of 200°C for 80 seconds to be dried, then immersing the polyester core wires thus treated in an adhesive solution formed by dissolving the same ethylene-propylene-diene rubber as that of the adhesive rubber in toluene, and then heating them at a temperature of 60°C for 40 seconds to be dried.

### (Measurement of adhesive force of polyester core wire to adhesive rubber layer)

The polyester core wires treated as shown above were sandwiched between the above-mentioned unvulcanized sheets of a rubber compound for a adhesive rubber layer to form a sample, and this sample was pressurized and heated at a surface pressure of 3920 kPa, at a temperature of 160°C for 35 minutes to perform press vulcanization. The adhesive force of the polyester core wire in an adhesion product thus obtained was measured.

### (Production of power transmission belt)

After a canvas and the above-mentioned unvulcanized sheet of a rubber compound for an adhesive rubber layer were wound around the side of a cylindrical forming drum with a smooth surface, the above-mentioned polyester core wire subjected to an adhesive treatment was spun in a spiral manner around these sheets. Further, the above-mentioned unvulcanized sheet of a rubber compound for an adhesive rubber layer were wound thereon, and then the unvulcanized sheet of a rubber compound for a compressed rubber layer was wound around this to obtain a laminate. This laminate was heated and pressurized at an internal pressure of 6 kgf/cm² and an external pressure of 9 kgf/cm² at a temperature of 165°C for 35 minutes in a vulcanizer and vulcanized it by steam to obtain an annular substance. Next, this annular substance was mounted on a first drive system comprising a drive roll and a driven roll and a plurality of ribs are formed on the surface with a grinding wheel while running the belt under a prescribed tension. Thereafter, this annular substance was further mounted on a second drive system comprising other drive roll and driven roll and cut to the prescribed width while running the belt to obtain a V-ribbed belt having three ribs and a peripheral length of 1000 mm as a product. Incidentally, the unvulcanized sheet of a rubber compound for an adhesive rubber layer and the unvulcanized sheet of a rubber compound for a compressed rubber layer used for the production of the respective V-ribbed belt are as shown in Table 3.

### (Running test of power transmission belt)

The V-ribbed belt thus obtained was attached on a belt drive system comprising a drive pulley 11 (diameter 120 mm), a driven pulley 12 (diameter 120 mm), an idler pulley 13 (diameter 70 mm) located between these two pulleys and a tension pulley 14 (diameter 55 mm). However, V-ribbed belt was engaged with the idler pulley at its back side.

In an atmosphere of a temperature of 130°C, a load of the driven pulley was set at 16 horse powers, an initial tension of the tension pulley was set at 85 kgf, and the drive pulley was rotated at 4900 rpm to drive and run the belt. A running time lapsed until the core wires were exposed out of the belt or break of the rubber layer occurred was assumed as a dynamic service life to evaluate the durability and the like of the above belt. And, it was observed whether abnormal noise arose or not during running the belt. The results of evaluations are shown in Table 3.

| | Adhesive rubber layer | | Compressed rubber layer | | Evaluation of adhesion | Running test of belt | | | Rating |
|---|---|---|---|---|---|---|---|---|---|
| | Compound | Diene content (% by mass) | Compound | Diene content (% by mass) | Adhesive force of core wires (kgf/3 wires) | Belt service life (hr) | Presence or absence and form of break | Abnormal noise | |
| Example 1 | Compound 3 | 6.0 | Compound A | 4.5 | 14.8 | 80 | none | none | good |
| Example 2 | Compound 3 | 6.0 | Compound B | 6.0 | 14.6 | 80 | none | none | good |
| Example 3 | Compound 4 | 9.0 | Compound A | 4.5 | 155.8 | 80 | none | none | good |
| Example 4 | Compound 8 | 6.0 | Compound A | 4.5 | 15.6 | 80 | none | none | good |
| Example 5 | Compound 5 | 4.5 | Compound A | 4.5 | 16.8 | 80 | none | none | good |
| Example 6 | Compound 6 | 4.5 | Compound A | 4.5 | 16.2 | 80 | none | none | good |
| Example 7 | Compound 2 | 4.5 | Compound A | 4.5 | 12 | 80 | none | none | good |
| Example 8 | Compound 3 | 6.0 | Compound F | 4.5 | 15.4 | 80 | none | none | good |
| Example 9 | Compound 7 | 4.5 | Compound F | 4.5 | 13 | 80 | none | none | good |
| Example 10 | Compound 1 | 3.5 | Compound D | 3.5 | 11.6 | 80 | none | none | good |
| Example 11 | Compound 1 | 3.5 | Compound E | 0 | 11.8 | 80 | none | none | good |
| Example 12 | Compound 2 | 4.5 | Compound F | 4.5 | 11.0 | 80 | none | none | good |
| Comparative Example 1 | Compound 1 | 3.5 | Compound A | 4.5 | 9.8 | 60 | exposure of core wires | none | bad |
| Comparative Example 2 | Compound 3 | 6.0 | Compound C | 7.0 | 14.4 | 70 | fracture of rubber layer | present | bad |
| Comparative Example 3 | Compound 2 | 4.5 | Compound B | 6.0 | 12 | 60 | cracks of adhesive rubber layer/compressed rubber layer | none | bad |
| Comparative Example 4 | Compound 9 | 3.0 | Compound E | 0 | 9.0 | 50 | exposure of core wire | none | bad |

From Table 3, it was found that the power transmission belts of Examples had a good adhesive force of the core wires, and therefore they did not cause the break or the like of the belt even during prolonged running and had excellent durability, and did not cause abnormal noise at the time of running the belt, but the power transmission belts of Comparative Examples did not have a good adhesive force of the core wires, or had a short service life and caused break, or caused abnormal noises at the time of running the belt.

### Industrial Applicability

The power transmission belt of the present invention can be suitably applied to belts for transmission such as a belt for driving of automobile's auxiliaries (dynamo, air conditioner, power steering and the like).

## Claims

1. A power transmission belt
in which an adhesive rubber layer (3) in which core wires (2) are embedded along the longitudinal direction of the belt is bonded by vulcanization to a compressed rubber layer (5) laminated on the inner surface of said adhesive rubber layer (3), and
wherein said adhesive rubber layer (3) and said compressed rubber layer (5) are formed by using ethylene-α-olefin-diene rubber compound,
**characterized in, that**
the diene content in ethylene-α-olefin-diene rubber of said adhesive rubber layer (3) is larger than the diene content in ethylene-α-olefin-diene rubber of said compressed rubber layer (5);
the diene content in ethylene-α-olefin-diene rubber of said adhesive rubber layer (3) is 6.0 to 10 % by mass and
the diene content in ethylene-α-olefin-diene rubber of said compressed rubber layer (5) is 0 to 4.5 % by mass.

2. The power transmission belt according to claim 1
**characterized in, that**
both, the adhesive rubber layer (3) and the compressed rubber layer (5) are crosslinked by peroxide or sulfur.

3. The power transmission belt according to claim 1,
**characterized in, that**
the adhesive rubber layer (3) contains a co-crosslinking agent and is crosslinked by peroxide.

## Patentansprüche

1. Kraftübertragungsriemen,
bei welchem eine Haftkautschukschicht (3), in welcher Kerndrähte (2) entlang der Längsrichtung des Riemens eingebettet sind, durch Vulkanisierung an eine Kompressionskautschukschicht (5) gebunden ist, die an die Innenfläche der Haftkautschukschicht (3) laminiert ist, und
wobei die Haftkautschukschicht (3) und die Kompressionskautschukschicht (5) unter Verwendung einer Ethylen-α-olefindienkautschukverbindung gebildet werden,
**dadurch gekennzeichnet, dass**
der Diengehalt in dem Ethylen-α-olefindienkautschuk der Haftkautschukschicht (3) größer ist als der Diengehalt in dem Ethylen-α-olefindienkautschuk der Kompressionskautschukschicht (5);
der Diengehalt in dem Ethylen-α-olefindienkautschuk der Haftkautschukschicht (3) 6,0 bis 10 Masse-% beträgt und
der Diengehalt in dem Ethylen-α-olefindienkautschuk der Kompressionskautschukschicht (5) 0 bis 4,5 Masse-% beträgt.

2. Kraftübertragungsriemen nach Anspruch 1,
**dadurch gekennzeichnet, dass** sowohl die Haftkautschukschicht (3) als auch die Kompressionskautschukschicht (5) durch Peroxid oder Schwefel vernetzt sind.

3. Kraftübertragungsriemen nach Anspruch 1,
**dadurch gekennzeichnet, dass** die Haftkautschukschicht (3) ein Vernetzungsmittel enthält und durch Peroxid vernetzt ist.

## Revendications

1. Courroie de transmission d'énergie,
dans laquelle une couche de caoutchouc adhésive (3), dans laquelle des fils métalliques centraux (2) sont noyés dans la direction longitudinale de la courroie, est liée par vulcanisation à une couche de caoutchouc comprimée (5) appliquée sur la surface interne de ladite couche de caoutchouc adhésive (3), et
dans laquelle ladite couche de caoutchouc adhésive (3) et ladite couche de caoutchouc comprimée (5) sont formées en utilisant un composé de caoutchouc de type éthylène-α-oléfine-diène,
**caractérisée en ce que**
la teneur en diène dans le caoutchouc d'éthylène-α-oléfine-diène de ladite couche de caoutchouc adhésive (3) est plus grande que la teneur en diène du caoutchouc d'éthylène-α-oléfine-diène de ladite couche de caoutchouc comprimée (5) ;
la teneur en diène du caoutchouc d'éthylène-α-oléfine-diène de ladite couche de caoutchouc adhésive (3) est de 6,0 à 10 % en masse et
la teneur en diène du caoutchouc d'éthylène-α-oléfine-diène de ladite couche de caoutchouc comprimée (5) est de 0 à 4,5 % en masse.

2. Courroie de transmission d'énergie selon la
revendication 1,
**caractérisée en ce que** :
la couche de caoutchouc adhésive (3) et la couche de caoutchouc comprimée (5) sont toutes deux réticulées par un peroxyde ou du soufre.

3. Courroie de transmission d'énergie selon la revendication 1,
**caractérisée en ce que** :
la couche de caoutchouc adhésive (3) contient un agent de co-réticulation et est réticulée par un peroxyde.
